# EUROPEAN PATENT APPLICATION

(11) **EP 2 413 130 A1**
(43) Date of publication of application: **01.02.2012**
(21) Application number: 10755615.1
(22) Date of filing: 16.03.2010
(51) Int. Cl.: G01N 21/27, G01N 1/06, G01N 21/01, G01N 21/64, G01N 35/00

(54) **OBSERVATION DEVICE**

(30) Priority: 27.03.2009 JP 2009078578
(71) Applicant: Sony Corporation, Tokyo 108-0075 (JP)
(72) Inventor: NITTA, Nao, Tokyo 108-0075 (JP)
(74) Representative: Müller - Hoffmann & Partner
(86) International application number: PCT/JP2010/001876
(87) International publication number: WO 2010/109811

(57) **Abstract**

[Object] To provide an observation apparatus capable of observing a high-resolution image.

[Solving Means] An observation apparatus (100) includes a sample holder (8) to hold a sample (P), a blade (7) to cut the sample (P) and subsequently form a new cross section, an optical system (3) including a first objective lens (11) and a second objective lens (12), and an electronic camera (2) to capture an image of the cross section of the sample (P). A main controller (16) causes the electronic camera (2) to capture a partial image corresponding to a part of the cross section via the first objective lens (11). The main controller moves an XY stage to change relative positions of the sample (P) and the optical system (3) within an XY plane, to thereby acquire a plurality of partial images. An image processing unit generates synthesized image data obtained by synthesizing the partial images for each cross section to display it on a display unit. Accordingly, a user can observe a high-resolution image.

## Description

### Technical Field

The present invention relates to an observation apparatus for observing an internal structure of a sample such as a biological sample.

### Background Art

Conventionally, as a method of analyzing in details a sample such as a pathological sample, there has been known a method of continuously slicing a sample with use of a microtome, attaching the resultant piece to a glass slide to form a preparation, and observe the piece or capture an image thereof.

In recent years, the field called digital pathology has also gathered attention. This is a method of forming a preparation by the above-mentioned method, and then capturing a high-resolution image of the entire piece and storing the image in a computer.
On the other hand, there is also known a sample observation apparatus capable of observing an internal structure of a sample without creating a preparation (see, for example, Patent Document 1).

The observation apparatus described in Patent Document 1 raises upwardly a sample held by a retaining tube with use of a movable stage by a predetermined amount and causes the sample to protrude from an upper end of the retaining tube by the predetermined amount. Then, the observation apparatus rotates a rotary plate to cut the protruding portion of the sample by a cutting blade and form a cross section. An image of a new cross section subsequently formed by the cutting blade is captured with a camera, and a three-dimensional image is displayed on a monitor on a display unit based on image data of the cross section.

Patent Document 1: Japanese Patent Application Laid-open No. Hei 10-206296 (paragraphs [0036] to [0039], Fig. 10)

### Disclosure of the Invention

### Problem to be solved by the Invention

Incidentally, for example, in the case where a sample such as a pathological sample is observed, a high-resolution image is required in many cases.

However, in Patent Document 1 described above, only one piece of image data can be acquired for one cross section. Therefore, in the observation apparatus described in Patent Document 1, a user cannot observe a high-resolution image.

In view of the circumstances as described above, it is an object of the present invention to provide an observation apparatus capable of observing a high-resolution image.

### Means for solving the Problem

In order to achieve the above object, according to an embodiment of the present invention, there is provided an observation apparatus including a holding unit, a cutting unit, an image capturing mechanism, a scanning mechanism, and a control means.
The holding unit holds a sample or a solid including the sample.
The cutting unit cuts the held sample or solid and subsequently forms a new cross section.
The image capturing mechanism captures a partial image that is an image within an image capturing range smaller than the cross section and is an image including a part of the cross section.
The scanning mechanism scans the image capturing range along the cross section.
The control means drives the scanning mechanism and captures the partial image for each image capturing range by the image capturing mechanism, to thereby generate information of a synthesized image of the cross section for each cross section, the synthesized image being an image obtained by synthesizing the plurality of partial images.

In the present invention, an image capturing unit can capture an image within the image capturing range having a range smaller than the cross section, and therefore a high-resolution partial image can be acquired. The high-resolution partial image is synthesized for each cross section, and information of the synthesized image is generated. The observation apparatus only needs to display a display image such as a planar image or a three-dimensional image of the sample based on the information of the synthesized image. Accordingly, a user can observe a high-resolution image.

In the observation apparatus, the control means may set a scanning area in which the image capturing range is scanned, based on the information of the synthesized image, each time the cross section is newly formed.
In the present invention, each time a cross section is newly formed, a scanning area having the size suited for a cross section newly formed can be set. Accordingly, since unnecessary areas can be prevented from being scanned, high-speed processing is enabled.

In the observation apparatus, the control means may set the scanning area corresponding to the cross section newly formed, based on the information of the synthesized image of the past cross section.
Accordingly, since unnecessary areas can be prevented from being scanned, high-speed processing is enabled.

In the observation apparatus, the control means may execute edge detection of an image corresponding to the sample from the synthesized image of the past cross section, and set the scanning area based on information of the detected edge.

In the observation apparatus, the control means may change an image area surrounded by the detected edge, and set an area including the edge of the image area before and after the change as the scanning area.
Accordingly, since unnecessary areas can be prevented from being scanned, high-speed processing is enabled.

In the observation apparatus, the image capturing mechanism may capture an entire image serving as an image within a range including at least the entire cross section of the sample, and the control means may set the scanning area corresponding to the cross section based on information of the entire image each time the cross section is newly formed.
In the present invention, each time a cross section is newly formed, a scanning area having the size suited for a cross section newly formed can be set. Accordingly, since unnecessary areas can be prevented from being scanned, high-speed processing is enabled.

In the observation apparatus, the control means may control an interval at which the sample is cut by the cutting unit to be variable.
In the present invention, an interval at which the sample is cut is controlled to be variable. The interval at which the sample is cut corresponds to a Z resolution of image data. In other words, the Z resolution of image data is controlled to be variable. Accordingly, for example, in the range in which a high Z resolution is not required, the interval is increased so that high-speed processing is enabled. On the other hand, in the range in which a high Z resolution is required, the interval is reduced so that higher-resolution image data can be acquired.

In the observation apparatus, the control means may extract a feature amount within an image of the sample based on the information of the synthesized image, and control the interval to be variable based on the extracted feature amount.
In the present invention, since the interval can be made variable in accordance with the feature amount within the image of the sample, for example, the interval (Z resolution) can be controlled to be variable with a cancer cell within a biological sample as a feature amount.

In the observation apparatus, the control means may control the interval such that the interval becomes smaller as the feature amount increases.
Accordingly, for example, in the case where the feature amount is a cancer cell within a biological sample, the interval can be reduced as the cancer cell increases, and the Z resolution can be made higher.

### Effect of the Invention

As described above, according to the present invention, an observation apparatus capable of observing a high-resolution image can be provided.

### Brief Description of Drawings

[Fig. 1] A schematic diagram showing an observation apparatus according to an embodiment of the present invention.
[Fig. 2] A flowchart showing an operation of the observation apparatus according to the embodiment of the present invention.
[Fig. 3] A schematic diagram for explaining the operation shown in Fig. 2.
[Fig. 4] A flowchart showing an operation of an observation apparatus according to another embodiment of the present invention.
[Fig. 5] A schematic diagram for explaining the operation shown in Fig. 4.
[Fig. 6] A flowchart showing an operation of an observation apparatus according to still another embodiment of the present invention.
[Fig. 7] A schematic diagram showing another embodiment of an optical system.

### Best Modes for Carrying Out the Invention

Hereinafter, embodiments of the present invention will be described with reference to the drawings.

### <First embodiment>

### (Overall structure of observation apparatus)

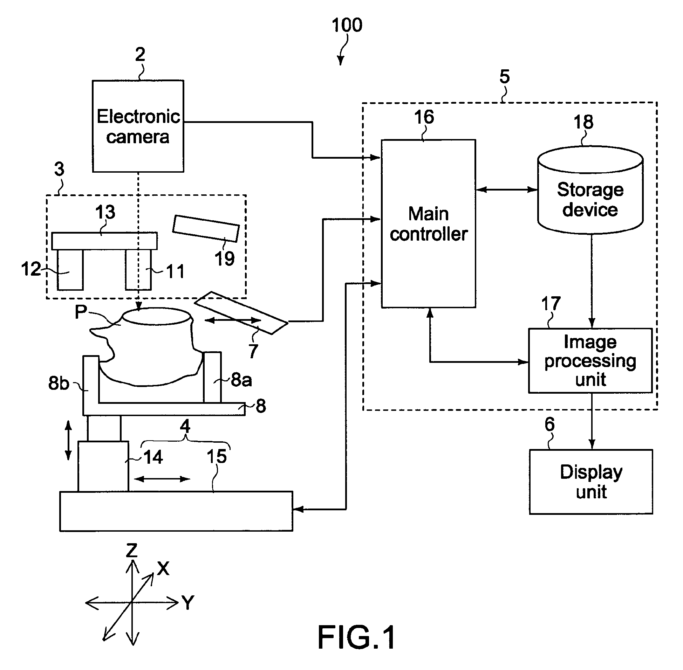

Fig. 1 is a schematic diagram showing an observation apparatus 100 according to a first embodiment of the present invention.
As shown in Fig. 1, the observation apparatus 100 includes a sample holder 8, a blade 7, an optical system 3, an electronic camera 2, and a control system 5.

The sample holder 8 includes a movable portion 8a at a side portion, the movable portion 8a being movable in a horizontal direction (XY direction), and interposes a sample P between the movable portion 8a and a side portion 8b opposite thereto to fix the sample P. The sample holder 8 is connected to an XYZ stage 4. For example, the XYZ stage 4 is connected to the sample holder 8 and includes a raising/lowering mechanism 14 and an XY stage 15, the raising/lowering mechanism 14 raising/lowering the sample holder 8, the XY stage 15 moving the raising/lowering mechanism 14 in an X-axis direction and a Y-axis direction.

The blade 7 is rotated by a rotation mechanism (not shown), and is configured to cut the sample P held by the sample holder 8 along an XY plane. The blade 7 is rotated by the rotation mechanism at a fixed position with respect to the observation apparatus 100. The blade 7 may be configured to cut the sample P by a horizontal movement. The blade 7 may have any configuration as long as the blade 7 cuts the sample P along the XY plane.

Drive mechanisms such as the raising/lowering mechanism 14, the XY stage 15, and the rotation mechanism are achieved by drive mechanisms such as rack-and-pinions, belts, chains, linear motors, ball screws, and fluid pressure cylinders.

The optical system 3 includes a light source 19 for illumination, two objective lenses 11 and 12, and a revolver 13 that switches those two objective lenses 11 and 12. The revolver 13 switches the two objective lenses 11 and 12 by being rotated by a rotation mechanism (not shown).

For the light source 19, for example, a light-emitting diode or a xenon lamp is used. For example, light from the light source 19 may be reflected on a mirror (not shown) to be incident on the objective lenses and illuminate the sample P.

For the first objective lens 11, for example, a lens of about a 40- to 60-fold magnification is used. For the second objective lens 12, a wide-angle lens having a lower magnification than that of the first objective lens 11 is used. As the second objective lens 12, a lens of several- to several ten-fold magnification is used. It should be noted that the magnification of the lenses described above is not limited to the range described above.

The optical system 3 may include a filter, a dichroic mirror, and the like. Accordingly, the configuration is made such that a fluorescence image, a multicolor image, or the like can be acquired.
The electronic camera 2 includes, for example, an imaging device such as a CCD (Charge Coupled Device) or a CMOS (Complementary Metal Oxide Semiconductor).

The control system 5 includes a main controller 16, an image processing unit 17, and a storage device 18.
The main controller 16 collectively controls the whole of the observation apparatus 100. For example, the main controller 16 controls the drive of the XYZ stage 4, the rotation mechanism of the blade 7, and the rotation mechanism of the revolver 13, or outputs image data obtained by the electronic camera 2 to the storage device 18. Further, the main controller 16 acquires the position of the sample holder 8 based on the XYZ stage 4, that is, three-dimensional position information of the sample P from the XYZ stage 4.

The storage device 18 tabulates the image data output from the main controller 16 together with the position information of the XYZ stage 4 for storage, and holds it.
The image processing unit 17 extracts the image data and the position information stored in the storage device 18, and executes predetermined image processing based on the extracted image data and position information.

The observation apparatus 100 includes a display unit 6 of liquid crystal or organic EL, for example. The image processing unit 17 outputs an image generated by the image processing to the display unit 6 in accordance with the control of the main controller 16 for display. The observation apparatus 100 may include a printing apparatus such as a printer, in addition to the display unit 6 or instead of the display unit 6.

As hardware for obtaining the main controller 16 and the image processing unit 17, for example, a CPU (Central Processing Unit), a DSP (Digital Signal Processor), an FPGA (Field Programmable Gate Array), an ASIC (Application Specific Integrated Circuit), an equivalent to them, or a combination of them is used.

The image processing unit 17 may be obtained by both software and hardware. In the case where the image processing unit 17 is obtained by both software and hardware, the hardware includes at least a storage apparatus for storing software programs (for example, ROM, another storage apparatus). The same holds true for the main controller 16.
The storage device 18 may be a disc-like recording medium such as a magnetic disc or an optical disc, or a recording medium such as a solid-state (semiconductor, dielectric, or magnetoresistive) memory.

As the sample P, for example, a pathological sample or a biological tissue sample P of animals or plants other than humans is used. The kind of sample P is not particularly limited, and a sample P selected as appropriate from medical, chemical, food, agricultural, and other fields may be used.

The sample P may be embedded by an embedding material made of resin or paraffin, for example, and held by the sample holder 8 as a solid including the sample P. The sample P may be held by the sample holder 8 as a sample P made by freeze embedding. In the case where the sample P is freeze-embedded, the sample holder 8 may include a cooling unit (not shown). Alternatively, in the case where the sample P is a hard substance, the sample P itself may be held by the sample holder 8.

The sample P may be stained before an image is captured. Examples of the kinds of staining include staining in a bright field using a stain solution, such as hematoxylin-eosin staining (HE staining), and staining by IHC (immunohisto chemistry) or FISH (Fluorescent in situ hybridization) method. Further, a staining method using a fluorescent substance, such as fluorescent stains for nucleic acids by DAPI (4',6-diamino-2-phenylindole), a staining method using an antibody or a nucleic-acid probe, or the like can be used.

In the case where the sample P is stained, the use of a whole mount method enables a cross section of the sample P to be stained.

### (Description on operation)

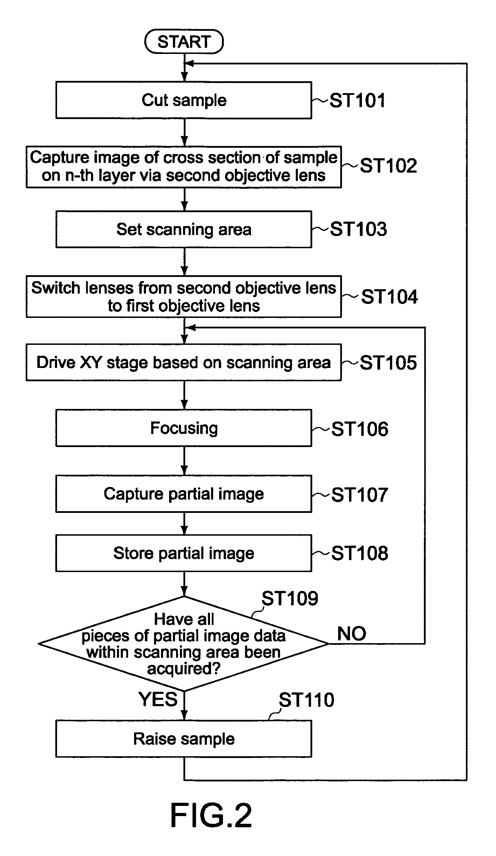

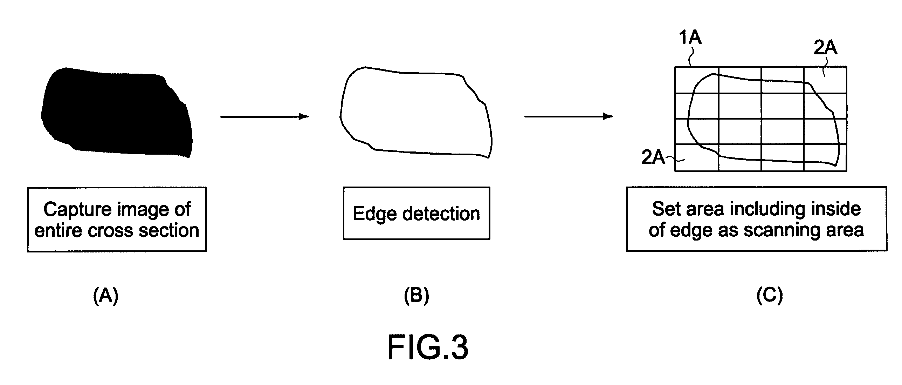

Fig. 2 is a flowchart showing an operation of the observation apparatus 100. Fig. 3 is a schematic diagram for explaining the operation shown in Fig. 2.

First, the main controller 16 drives the rotation mechanism provided to the blade 7 to cut an upper end portion of the sample P by the blade 7 (Step 101). The sample P is cut, and a cross section of the sample P on an n-th layer is then formed.

After the cross section of the sample P on the n-th layer is formed, the main controller 16 controls the electronic camera 2 to capture an image of the cross section of the sample P on the n-th layer via the second objective lens 12 (Step 102). At this time, an image to be captured via the second objective lens 12 is an image within a range including at least the entire cross section of the sample P on the n-th layer.

The main controller 16 acquires entire image data including the entire cross section on the n-th layer, and then sets a scanning area 1A based on the entire image data (Step 103). Here, the scanning area 1A refers to an area in which image capturing ranges 2A are scanned, an image of the image capturing range 2A being captured by the electronic camera 2 via the first objective lens 11 (see Fig. 3(C)).

The main controller 16 typically executes edge detection of the cross section on the n-th layer based on the entire image data in Step 103 (see Fig. 3(B)), and sets an area including the inside of the edge as a scanning area 1A (see Fig. 3(C)). The edge detection may be executed by, for example, determining a threshold value of luminance information of the entire image.

Upon setting of the scanning area 1A, the main controller 16 drives the rotation mechanism of the revolver 13 to switch lenses from the second objective lens 12 to the first objective lens 11 (Step 104).

Next, the main controller 16 drives the XY stage 15 based on information of the set scanning area 1A, to move the sample holder 8 in the X-axis direction and the Y-axis direction (Step 105).

The sample holder 8 is moved to a predetermined position, and then a distance from the first objective lens 11 to the cross section of the sample P on the n-th layer is measured by an active ranging system using near infrared rays or the like. The main controller 16 raises/lowers the raising/lowering mechanism 14 in accordance with the measured distance and adjusts focus (Step 106). It should be noted that the ranging system is not limited to the active ranging system. For example, a passive ranging system such as a TTL (Through the Lens) system may be used, and the ranging system is not particularly limited.

Upon adjustment of focus, the main controller 16 controls the electronic camera 2 to capture a partial image corresponding to a part of the cross section on the n-th layer via the first objective lens 11 (Step 107). It should be noted that in the following description, a range in which an image can be captured by the electronic camera 2 via the first objective lens 11 is referred to as an image capturing range 2A (see Fig. 3(C)).

Upon capture of the partial image of the cross section on the n-th layer, the main controller 16 acquires three-dimensional position information of the sample P from the XYZ stage 4, and outputs the three-dimensional position information to the storage device 18 together with partial image data. The storage device 18 tabulates the partial image data output from the main controller 16 and the position information of the XYZ stage 4 for storage, and holds it (Step 108) .

Next, the main controller 16 determines whether all pieces of partial image data within the scanning area 1A have been acquired (Step 109). In the case where all images within the scanning area 1A have not acquired (NO of Step 109), the main controller 16 moves the XY stage 15 by a predetermined distance (Step 105). In this case, the image capturing range 2A in which an image can be captured by the electronic camera 2 via the first objective lens 11 is moved along the cross section of the sample P so as to be scanned.

Hereinafter, the processing shown in Step 105 to Step 109 is repeated until all images within the scanning area 1A are acquired.

In the case where all images within the scanning area 1A are acquired (YES of Step 109), the main controller 16 raises the raising/lowering mechanism 14 and then raises the sample P (Step 110). At this time, a distance in which the sample P is raised is 50 µm to 100 µm, for example, but the distance is not limited to this range. The distance in which the sample P is raised corresponds to Z resolution of the acquired image data.

Upon raise of the raising/lowering mechanism 14 by a predetermined distance, the main controller 16 rotates the blade 7. Accordingly, the sample P is cut by the distance in which the sample P is raised, and a cross section of the sample P on an (n+1)-th layer is formed.
Hereinafter, the processing shown in Steps 101 to 110 is executed until the whole of the sample P is cut.

The image processing unit 17 acquires the partial image data and the position information of the XYZ stage 4 from the storage device 18 to synthesize the partial image data based on the position information, to thereby generate synthesized image data for each cross section. The image processing unit 17 displays a display image such as a three-dimensional image or a planar image of the sample P based on the synthesized image data.

The image processing unit 17 may execute processing such as adjustment of a position and correction of color tone or brightness at a time when the partial image data is synthesized. The image processing unit 17 may create a three-dimensional image cut in an optional cross section in a pseudo manner based on the partial image data, and display the three-dimensional image on the display unit 6.

The main controller 16 may not display a display image such as the planar image or the three-dimensional image as it is, but may execute various image analyses. For example, the main controller 16 may execute processing such as identification of a specific cell or a specific tissue, detection of the presence/absence of an image feature peculiar to an area of lesion and identification of a characteristic area, and detection of the presence/absence of expression of specific genes and an analysis of its spatial distribution.

In this embodiment, the partial image data of the sample P, the partial image of which is captured via the high-magnification first objective lens 11, is acquired as described above, and the partial image data is synthesized, and accordingly planar image data and three-dimensional image are generated. Accordingly, a user can observe a high-resolution image.

Further, in the present invention, the scanning area 1A is set based on the entire image data, an image of which is captured via the second objective lens 12, and therefore each time a cross section is newly formed, a scanning area 1A having a size suited for the newly formed cross section can be set. Accordingly, since unnecessary areas can be prevented from being scanned, high-speed processing is enabled.

Further, in this embodiment, since the position information of the XYZ stage 4 is recorded together with the partial image data, alignment of synthesized image data for each cross section, which are obtained from pieces of partial image data, can be performed based on the recorded position information. This is much more convenient and high-speed, as compared to three-dimensional image construction by digital pathology using an image of a glass slide.

Particularly, in the case where the sample P is a pathological sample P, a high-resolution image and high-speed processing are required in many cases. Therefore, the observation apparatus 100 according to this embodiment produces a particularly large effect at a time when the pathological sample P is observed.

In the description of this embodiment, an area including the inside of the detected edge is set as a scanning area 1A in Step 104. In other words, the scanning area 1A is described as an area larger than the edge, which includes the whole of the edge. However, the scanning area 1A is not limited thereto and may be an area smaller than the edge. For example, in the case where an area intended to be observed is located at the center portion of the cross section of the sample P, the main controller 16 may be caused to perform control such that the scanning area 1A is set as an area smaller than the edge. Accordingly, the user can observe a display image of a necessary portion of the sample P. Further, such processing also enables high-speed processing.

### <Second embodiment>

Next, a second embodiment of the present invention will be described.

In the second embodiment, the method of setting the scanning area 1A is different from that of the first embodiment described above, and therefore that point will mainly be described. It should be noted that in the following description, components having the same structures and functions as those of the first embodiment described above are denoted by the same reference symbols, and description thereof will be simplified or omitted.

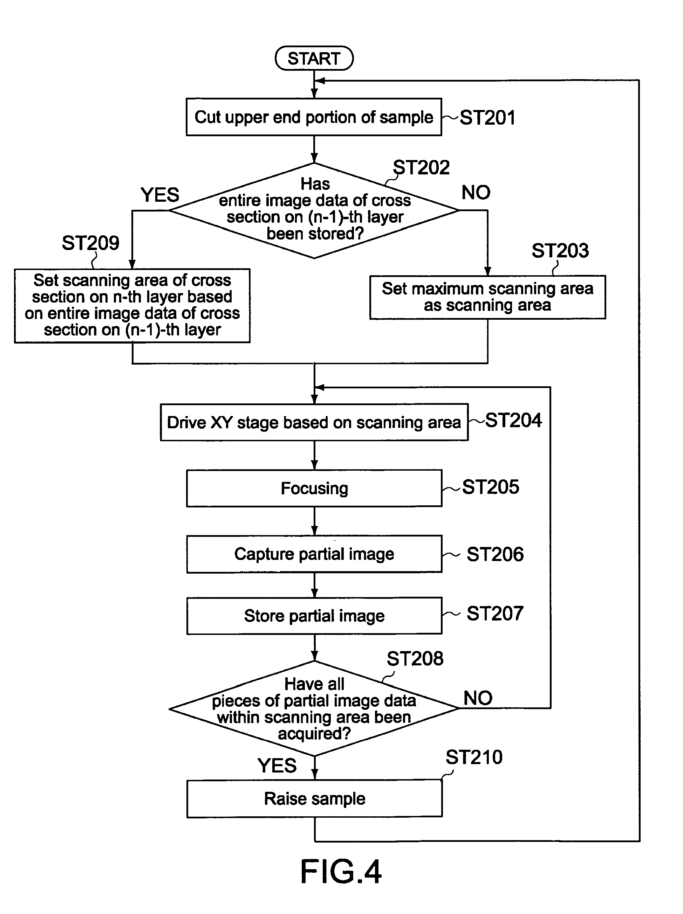

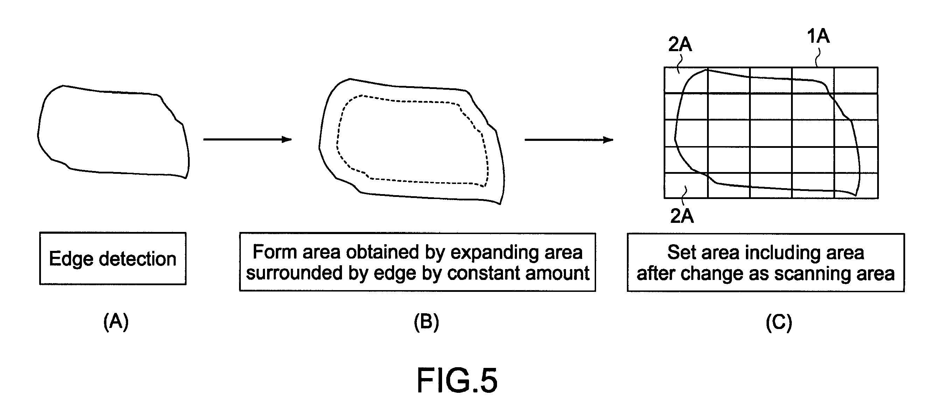

Fig. 4 is a flowchart showing an operation of an observation apparatus 100 according to the second embodiment. Fig. 5 is a schematic diagram for explaining the operation shown in Fig. 4.

First, the main controller 16 drives the blade 7 to cut an upper end portion of the sample P by the blade 7 (Step 201). Upon cut of the sample P, a cross section of the sample P on an n-th layer is formed.

Upon formation of the cross section of the sample P on the n-th layer, the main controller 16 determines whether entire image data of a (previous) cross section of the sample P on an (n-1)-th layer has been stored in the storage device 18 (Step 202). Here, the entire image data of the cross section on the (n-1)-th layer to be determined in Step 202 may be synthesized image data formed by synthesizing partial image data, or may be entire image data of a cross section acquired via the second objective lens 12.

In the case where the entire image data of the cross section on the (n-1)-th layer is not stored, the main controller 16 sets a maximum scanning area serving as a maximum area of the scanning area 1A, as a scanning area 1A (Step 203).

Then, the main controller 16 scans the image capturing range 2A within the maximum scanning area (Step 204 to Step 207). In this case, the processing of a movement of the XY stage 15 (Step 204), focusing (Step 205), image capturing (first objective lens 11) (Step 206), data storage (Step 207), and determination (Step 208) in this order is repeated within the maximum scanning area. In the case where the image capturing ranges 2A have all been scanned within the maximum scanning area, the processing returns to Step 201 again.

In the case where the entire image data of the cross section on the (n-1)-th layer is stored in Step 202, the main controller 16 sets a scanning area 1A of the cross section on the n-th layer, based on the entire image data of the cross section on the (n-1)-th layer (Step 209). Typically, the main controller 16 executes edge detection of the image data on the (n-1)-th layer (see Fig. 5(A)). Then, the main controller 16 forms an area obtained by expanding an area surrounded by the detected edge by a constant amount (hereinafter, change area) (see Fig. 5(B)). Next, the main controller 16 sets an area including the change area as a scanning area 1A (see Fig. 5(C)).

Upon setting of the scanning area 1A, the main controller 16 executes processing shown in Step 204 to Step 210.

In this embodiment, since a scanning area 1A of a new cross section can be set based on the image data of the last cross section, unnecessary areas can be prevented from being scanned. Accordingly, high-speed processing is enabled.

In the case where the entire image data of the cross section on the (n-1)-th layer does not exist in Step 202, the main controller 16 may acquire entire image data of the cross section on the n-th layer via the second objective lens 12. In this case, the main controller 16 sets a scanning area 1A based on the acquired entire image data of the n-th layer, and scans the image capturing ranges 2A within the scanning area 1A. In other words, in the case where the entire image data of the cross section on the (n-1)-th layer does not exist, the main controller 16 may execute the processing shown in Steps 102 to 109 of Fig. 2.

In the description described above, the change area is formed by expanding an area surrounded by the edge. However, the change area is not limited thereto and may be formed by contracting an area surrounded by the edge contracted.

### <Third embodiment>

Next, a third embodiment of the present invention will be described.

The third embodiment is different from the embodiments described above in that an interval at which the sample P is cut by the blade 7 is controlled to be variable. Therefore, that point will mainly be described.

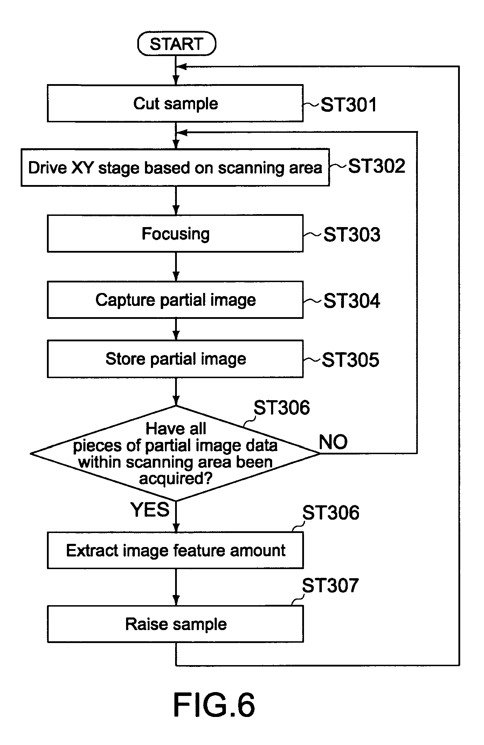

Fig. 6 is a flowchart showing an operation of an observation apparatus 100 according to a third embodiment.

As shown in Fig. 6, the main controller 16 first rotates the blade 7 to cut an end portion of the sample P, and forms a cross section of the sample P on an n-th layer (Step 301).

Upon formation of the cross section of the sample P on the n-th layer, the main controller 16 executes the same processing as those shown in Steps 105 to 109 of Fig. 2, in Step 302 to Step 306. It should be noted that regarding the processing in Steps 301 to 306, the same processing as those in Steps 101 to 109 shown in Fig. 2 described above may be executed, or the same processing as those in Steps 201 to 208 shown in Fig. 4 may be executed. Further, all modified examples shown in the embodiments described above can be applied to this embodiment.

Upon formation of the cross section of the sample P on the n-th layer, the main controller 16 synthesizes the partial image data obtained by the processing in Steps 302 to 306, and generates synthesized image data. Then, the main controller 16 extracts an image feature amount by an image analysis, based on the synthesized image data (Step 306). For example, the image feature amount is determined based on luminance information of the synthesized image data, or the like. As the extracted image feature amount, various things can be used as indices. In this embodiment, an image pattern of a cancer cell is used as an index. In the case where an image pattern of a cancer cell is used as an index, the size of the cancer cell may be used as an index, or a ratio of the size of the cancer cell to the size of the cross section may be an index.

If an image feature amount is determined with an image pattern of a cancer cell as an index, the main controller 16 raises the raising/lowering mechanism 14 by a distance corresponding to the size of the cancer cell to thereby raise the sample P (Step 307). In this case, the distance in which the sample P is raised is set to become smaller as the cancer cell increases in size. It should be noted that the distance in which the sample P is raised corresponds to the Z resolution of the image data as described above. Therefore, the Z resolution of the image data rises as the cancer cell increases in size.

The distance in which the sample P is raised may become smaller in a stepwise manner as the cancer cell increases in size, or may become smaller in a linear function manner. Alternatively, the distance may become smaller in an exponential manner.

Incidentally, in the case where an intraoperative rapid diagnosis for a cancer tissue or the like is performed, it is be required to determine in a short time whether a cancer cell exists within an obtained biological sample P in some cases. In this case, in this embodiment, since the Z resolution can be improved only in an area where the presence of the cancer cell is highly suspected, working hours can be shortened.

As another example of the image feature amount, for example, a dimension of the cross section of the sample P occupied within the synthesized image data is included. Also in this case, a setting is made such that as the image feature amount increases, a distance in which the sample P is raised becomes smaller. In the case where the sample P is embedded/fixed by an embedding material made of a resin or the like, a period of time during which the sample P emerges on the cross section thereof whose image is intended to be captured can be shortened, and accordingly a working efficiency can be improved.

In this embodiment, as an image feature amount increases, a distance in which the sample P is raised becomes smaller. However, a configuration may be conceived in which as the image feature amount increases, a distance in which the sample P is raised also becomes larger.

Here, an image feature amount to be used and a Z resolution corresponding thereto differ depending on property of a target to be observed. In this regard, those parameters are prepared in advance on a computer, and a mechanism is attached, by which a user can select parameters to be used in an experiment when performing an experiment, and accordingly a wording efficiency of the user can improved.

### <Various modified examples>

In the embodiments described above, the configuration in which the sample P is moved in the XY direction and the optical system 3 and the electronic camera 2 are fixed has been described. However, the configuration is not limited to the above, and the sample P may be fixed in the XY direction and the optical system 3 and the electronic camera 2 may be moved in the XY direction. Alternatively, both the sample P, and the optical system 3 and electronic camera 2 may be moved in the XY direction. In other words, any configuration may be used as long as relative positions of the sample P and the optical system 3 and electronic camera 2 in the XY direction can be changed in the configuration.

Further, in the embodiments described above, the configuration in which the sample P is moved on the optical system 3 and electronic camera 2 side has been described as to the movement in the Z direction. However, the configuration is not limited to the above, and the optical system 3 and the electronic camera 2 may be moved on the sample P side. In this case, the blade 7 is also moved on the sample P side in accordance with the movement of the optical system 3 and the electronic camera 2.

In the embodiments described above, the dyeing of the sample P is performed as pretreatment. However, the dyeing is not limited to the above, and a method of applying dyeing chemicals to a newly formed cross section may be used each time a cross section of the sample P is formed. In this case, an application mechanism for applying dyeing chemicals may be arranged at a position facing the cross section of the sample P.

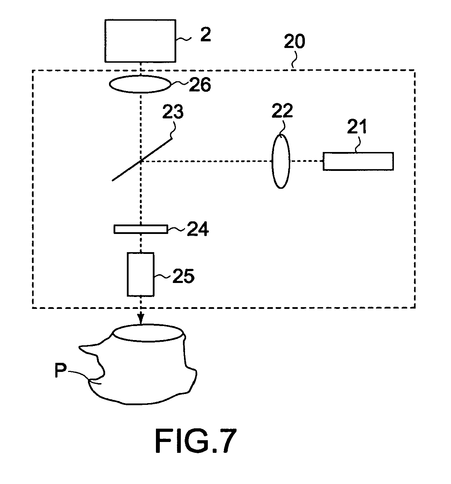

Fig. 7 is a schematic diagram showing another embodiment of an optical system.
As shown in Fig. 7, an optical system 20 is constituted of a light source 21, a polarizer 22, a beam splitter 23, a Wollaston prism 24, an objective lens 25, and an analyzer 26.

Light from the light source 21 is incident on the polarizer 22 to be a linearly polarized light beam in a predetermined vibration direction. The linearly polarized light beam from the polarizer 22 is reflected on the beam splitter 23 to be incident on the Wollaston prism 24, and split into two linearly polarized light beams whose vibration directions are orthogonal to each other. Those two linearly polarized light beams become collected light substantially parallel to each other via the objective lens 25 and illuminated vertically at different positions on the cross section of the sample P.

The light beams reflected at the two different positions are incident on the Wollaston prism 24 again via the objective lens 25, and synthesized to travel on the same optical path. The two light beams from the Wollaston prism 24 are incident on the analyzer 26 via the beam splitter 23, and components of the same vibration direction are extracted to cause polarizing interference. After that, the light subjected to polarizing interference is guided to an imaging surface of the electronic camera 2 and a differential interference image is formed.

### Description of Symbols

- P: sample
- 1A: scanning area
- 2A: image capturing range
- 2: electronic camera
- 3: optical system
- 4: XYZ stage
- 5: control system
- 6: display unit
- 7: blade
- 8: sample holder
- 11: first objective lens
- 12: second objective lens
- 13: revolver
- 14: raising/lowering mechanism
- 15: XY stage
- 16: main controller
- 17: image processing unit
- 18: storage device
- 100: observation apparatus

## Claims

1. An observation apparatus, comprising:
a holding unit to hold a sample or a solid including the sample;
a cutting unit to cut the held sample or solid and subsequently form a new cross section;
an image capturing mechanism to capture a partial image that is an image within an image capturing range smaller than the cross section and is an image including a part of the cross section;
a scanning mechanism to scan the image capturing range along the cross section; and
a control means for driving the scanning mechanism and capturing the partial image for each image capturing range by the image capturing mechanism, to thereby generate information of a synthesized image of the cross section for each cross section, the synthesized image being an image obtained by synthesizing the plurality of partial images.

2. The observation apparatus according to claim 1, wherein
the control means sets a scanning area in which the image capturing range is scanned, based on the information of the synthesized image, each time the cross section is newly formed.

3. The observation apparatus according to claim 2, wherein
the control means sets the scanning area corresponding to the cross section newly formed, based on the information of the synthesized image of the past cross section.

4. The observation apparatus according to claim 3, wherein
the control means executes edge detection of an image corresponding to the sample from the synthesized image of the past cross section, and sets the scanning area based on information of the detected edge.

5. The observation apparatus according to claim 4, wherein
the control means changes an image area surrounded by the detected edge, and sets an area including the edge of the image area before and after the change as the scanning area.

6. The observation apparatus according to claim 1, wherein
the image capturing mechanism captures an entire image serving as an image within a range including at least the entire cross section of the sample, and
the control means sets the scanning area corresponding to the cross section based on information of the entire image each time the cross section is newly formed.

7. The observation apparatus according to claim 1, wherein
the control means controls an interval at which the sample is cut by the cutting unit to be variable.

8. The observation apparatus according to claim 7, wherein
the control means extracts a feature amount within an image of the sample based on the information of the synthesized image, and controls the interval to be variable based on the extracted feature amount.

9. The observation apparatus according to claim 8, wherein
the control means controls the interval such that the interval becomes smaller as the feature amount increases.
